# EUROPÄISCHE PATENTSCHRIFT

(11) **EP 3 735 545 B1**
(45) Veröffentlichungstag und Bekanntmachung des Hinweises auf die Patenterteilung: **09.02.2022**
(21) Anmeldenummer: 18827106.8
(22) Anmeldetag: 21.12.2018
(51) Int. Cl.: F16H 63/48, B60W 50/14, F16H 57/01, F16H 61/12

(54) **VERFAHREN ZUM STEUERN EINES KRAFTFAHRZEUGES MIT PARKSPERRE**
METHOD FOR CONTROLLING A MOTOR VEHICLE HAVING A PARK LOCK
PROCÉDÉ DE COMMANDE D'UN VÉHICULE AUTOMOBILE AVEC VERROUILLAGE DE STATIONNEMENT

(30) Priorität: 04.01.2018 DE 102018200092
(43) Veröffentlichungstag der Anmeldung: 11.11.2020
(73) Patentinhaber: VOLKSWAGEN AKTIENGESELLSCHAFT, 38440 Wolfsburg (DE)
(72) Erfinder: MOELLER, Peter, 38464 Groß Twülpstedt (Rümmer) (DE); SAMSON, Stefan, 38104 Braunschweig (DE); ERNST, Stefan, 38442 Wolfsburg (DE); WARNECKE, Raimar, 38179 Groß Schwülper (DE)
(86) Internationale Anmeldenummer: PCT/EP2018/086506
(87) Internationale Veröffentlichungsnummer: WO 2019/134853

(56) Entgegenhaltungen:
- DE-A1-102004 039 467
- DE-A1-102013 009 747
- DE-A1-102013 014 746
- DE-A1-102015 213 611

## Beschreibung

Die Erfindung betrifft ein Verfahren zum Steuern eines Kraftfahrzeuges mit mindestens einer Parksperre gemäß den Merkmalen des Oberbegriffs des Patentanspruchs 1.

Zum Steuern eines Kraftfahrzeugs mit einer Parksperre weist der Antriebsstrang eines Kraftfahrzeuges insbesondere mehrere Komponenten, insbesondere einen Antriebmotor, mindestens ein Rad, insbesondere mehrere Räder, und mindestens ein Getriebe auf, wobei die entsprechenden Komponenten wirksam miteinander gekoppelt und/oder verbunden sind, um ein entsprechenden vom Antriebmotor verursachten Antrieb auf das entsprechende mindestens eine Rad zu übertragen.

Ein herkömmliches Kraftfahrzeug weist daher im Allgemeinen einen Antriebmotor, mehrere Räder, ein Getriebe mit einer Antriebswelle, einer Abtriebswelle und einer Parksperre, insbesondere zum Blockieren der Abtriebswelle, sowie ein Bedienelement für die Parksperre auf. Die Antriebswelle ist an den Antriebmotor gekoppelt bzw. mit diesem koppelbar und/oder wirksam verbunden, die Abtriebswelle ist an mindestens ein Rad gekoppelt bzw. mit diesem koppelbar und/oder wirksam verbunden, und das Bedienelement ist funktionstechnisch direkt oder indirekt an die Parksperre gekoppelt bzw. mit dieser wirksam verbunden, insbesondere bei einer direkt manuell betätigbaren Parksperre.

Der Fahrer des Kraftfahrzeugs kann durch Betätigen des Bedienelements die Parksperre einlegen und so ein unbeabsichtigtes Wegrollen des stehenden Kraftfahrzeugs verhindern. Der Fahrer kann jedoch auch während der Fahrt durch eine Betätigung des Bedienelements die Parksperre einlegen, insbesondere wenn das Kraftfahrzeug mit nur sehr langsamer Fahrt rollt, und so dann ein Abbremsen des rollenden Kraftfahrzeugs bewirken. Dies wird auch als sogenannte "missbräuchliche Betätigung" der Parksperre bezeichnet und führt zu einem erhöhten Verschleiß des Getriebes und/oder der entsprechenden Bauteile.

Die DE 10 2013 009 747 A1 beschreibt einen Kraftwagen mit einem Antriebsstrang mit einer antreibbaren Achse, welche über eine ein Getriebe aufweisende Kraftübertragungseinrichtung mit einem Elektromotor verbunden ist. Der Kraftwagen weist eine Parksperre auf, mittels welcher die Kraftübertragungseinrichtung blockierbar ist, sowie eine Feststellbremse, mittels welcher der Kraftwagen festlegbar ist. Das Getriebe weist eine Festübersetzung auf, in welche die Parksperre eingreift. Die Feststellbremse ist ein zur Parksperre redundantes Bremssystem. Bei einer Störung der Parksperre ist ein Warnsignal an eine im Kraftwagen einsitzende Person übermittelbar. Im Falle einer Fehlfunktion der Parksperre ist die Feststellbremse automatisch betätigbar. Bei diesem bekannten Kraftwagen wird das Warnsignal bei der vorliegenden Störung der Parksperre übermittelt und die Feststellbremse wird im Falle einer Fehlfunktion der Parksperre automatisch betätigt.

Die DE 102 43 276 B4 beschreibt ein Verfahren zur Steuerung einer Wählhebelsperre zur Verhinderung einer missbräuchlichen Betätigung einer Parksperre durch Verschieben eines Wählhebels eines Automatikgetriebes eines Kraftfahrzeuges. Der Wählhebel ist über einen Seilzug mit der Parksperre verbunden. Über ein Steuergerät wird die Fahrzeuggeschwindigkeit (v) des Fahrzeugs sensorgestützt erfasst. Die Wählhebelsperre wird zum Verhindern eines Einlegens der Parksperre aktiviert, wenn die Fahrzeuggeschwindigkeit (v) größer als eine Grenzgeschwindigkeit (vlim) ist. Die Wählhebelsperre wird zum Ermöglichen des Einlegens der Parksperre deaktiviert, wenn die Fahrzeuggeschwindigkeit kleiner oder gleich der Grenzgeschwindigkeit (v ≤ vlim) ist. Dieses bekannte Verfahren verhindert zwar das Einlegen der Parksperre bei zu schneller Fahrt, also wenn das Kraftfahrzeug schneller als die Grenzgeschwindigkeit fährt, jedoch verhindert es nicht, sondern ermöglicht das Einlegen der Parksperre bei langsamer Fahrt, also wenn das Kraftfahrzeug nicht schneller bzw. langsamer als die Grenzgeschwindigkeit fährt. Die DE 10 2004 039 467 A1 beschreibt ein Verfahren zur Einstellung einer Parkstellung-Betriebsstufe, wenn die Fahrzeuggeschwindigkeit oberhalb eines Grenzwertes liegt.

Die DE 10 2006 061 656 A1 beschreibt ein Verfahren zur Abschätzung des Verschleißzustandes einer elektrischen Parkbremse, die zur Erzeugung zumindest eines dynamischen Bremsvorganges in einem Fahrzeug über ein Steuersystem angesteuert wird. Unter einem dynamischen Bremsvorgang wird hierbei ein Bremsen des in Bewegung befindlichen Fahrzeuges verstanden, welche eine vorgegebene Mindestgeschwindigkeit von beispielsweise ca. 5 km/h überschreitet. Das Vorliegen eines dynamischen Bremsvorganges wird ermittelt. Abhängig davon wird ein den aktuellen Verschleißzustand der elektrischen Parkbremse angebender Referenzwert aktualisiert. Der Referenzwert ist zur Abschätzung des Verschleißzustandes, vor, während oder unmittelbar nach der Aktivierung einer elektronischen Parkbremse entsprechend aktualisiert. Zur Ermittlung des Vorliegens eines dynamischen Bremsvorganges wird ein von der Geschwindigkeit des Fahrzeuges abhängiges erstes Messsignal erzeugt und durch das Steuersystem ausgewertet. Von dem erzeugten ersten Messsignal wird die einzelne Messgröße abgeleitet, die mit einem zugeordneten ersten Messschwellwert verglichen wird, und bei dessen Überschreiten durch die Messgröße wird ein erhöhter Verschleißzustand detektiert. Als aktualisierter Referenzwert wird die Anzahl der dynamischen Bremsvorgänge erfasst, und abhängig davon wird der Verschleißzustand der elektrischen Parkbremse abgeschätzt. Der Verschleißzustand der elektrischen Parkbremse wird dem Fahrer des Fahrzeuges angezeigt. Die elektrische Parkbremse ist zusätzlich zu einer herkömmlichen Betriebsbremse des Fahrzeuges vorgesehen. Im Normalfall erfolgt ein dynamisches Bremsen des Fahrzeuges über die Betriebsbremse und ein statisches Bremsen des Fahrzeuges mittels der elektrischen Parkbremse. Jedoch kann in speziell vorgegebenen Fahrsituationen oder Notfallsituationen die elektrische Parkbremse zusätzlich oder alternativ zum dynamischen Bremsen des Fahrzeuges eingesetzt werden. Die elektrische Parkbremse weist zur Erzeugung einer Stellkraft eine Elektromotor-Getriebeeinheit auf. Die Stellkraft wird von der Elektromotor-Getriebeeinheit an eine Bremsenmechanikeinheit übertragen, welche hierzu über ein Seilzugsystem mit der Elektromotor-Getriebeeinheit in Wirkverbindung steht. Abhängig von der an der Bremsenmechanikeinheit anliegenden Stellkraft wird eine Bremskraft durch die Bremsenmechanikeinheit erzeugt, mittels der mindestens ein Rad des Fahrzeugs abgebremst wird. Dieses bekannte Verfahren betrifft den Verschleiß einer elektrischen Parkbremse, die ein Rad des Fahrzeugs bremst.

In der DE 10 2013 014 746 A1 ist ein Verfahren zum Steuern eines Kraftfahrzeugs mit mindestens einer Parksperre offenbart. Das Kraftfahrzeug weist einen Antriebsstrang auf, wobei der Antriebsstrang ein Getriebe mit einer Abtriebswelle und Räder aufweist. Es ist ein Bedienelement der Parksperre vorgesehen, um die Parksperre von einer Freigabestellung der Parksperre in eine Blockierstellung der Parksperre (oder umgekehrt) zu führen. Der Antriebsstrang weist weiter eine Steuerungseinrichtung auf, mittels welcher eine Wirksamkeit der Parksperre überwacht wird. Ein Drehzahlsensor der Abtriebswelle und ein Sensor des Bedienelementes ist mit der Steuerungseinrichtung steuerungstechnisch verbunden. Wenn in einer Blockierstellung der Parksperre der Drehzahlsensor eine Drehbewegung der Abtriebswelle erfasst, detektiert die Steuerungseinrichtung die Drehbewegung und erkennt eine Störung der Funktion der Parksperre. Die Steuerungseinrichtung erkennt die Störung unabhängig davon, ob diese durch eine Fehlfunktion des Bedienelementes und/oder durch eine Fehlfunktion der Parksperre selbst verursacht wird. Die Steuerungseinrichtung erzeugt ein Warnsignal, schreibt das Warnsignal in einen Fehlerspeicher und übermittelt das Warnsignal an ein Kombinationsinstrument. Das Kombinationsinstrument gibt einen entsprechenden Hinweis mittels eines Anzeigeelement aus, wodurch ein Fahrer auf die Störung hingewiesen wird und auf die Störung reagieren kann.

Der Erfindung liegt daher die Aufgabe zu Grunde, ein Verfahren zum Steuern eines Kraftfahrzeuges mit einer Parksperre zu verbessern.

Die der Erfindung zu Grunde liegende Aufgabe wird durch ein Verfahren zum Steuern eines Kraftfahrzeuges mit mindestens einer Parksperre mit den Merkmalen des Patentanspruchs 1 gelöst. Vorteilhafte Ausführungsformen der Erfindung sind in den abhängigen Ansprüchen beschrieben.

Zunächst wird die Geschwindigkeit des Kraftfahrzeuges ermittelt, nach Betätigung des Bedienelements und falls die Parksperre zuvor die Freigabestellung einnimmt, wird geprüft, ob die Geschwindigkeit größer als ein vorbestimmter erster Schwellenwert ist, falls diese Prüfung erfolgreich war, wird ein erstes Warnsignal erzeugt, wobei das Schalten der Parksperre in die Blockierstellung ausgeführt wird.

Der Grundgedanke der Erfindung geht zunächst dahin, dass mit Hilfe der Parksperre, wenn diese aus der Freigabestellung in die Blockierstellung geschaltet wird, der Antriebsstrang und/oder ein Teil des Antriebsstranges, insbesondere eine Komponente des Antriebsstranges blockiert wird. Sollte aber bei dem Einlegen der Parksperre in die Blockierstellung eine sogenannte "missbräuchliche Betätigung" des Fahrers vorliegen, der das Bedienelement manuell betätigt hat, so wird ein erstes Warnsignal erzeugt. Hierdurch wird dem Fahrer die "missbräuchliche Betätigung" der Parksperre bewusst gemacht, insbesondere der Fahrer auch gewarnt, möglicherweise dann - in Zukunft - beim Einlegen der Parksperre mehr auf seine über das Bedienelement ausgeübten Befehle zu achten. Es wird also die Aufmerksamkeit des Fahrers durch das erste Warnsignal entsprechend erhöht.

Da das erste Warnsignal bereits bei der ersten erfolgreichen Prüfung erzeugt wird (und nicht erst wie im Stand der Technik bei der DE 10 2013 009 747 A1 bei einer Störung der Parksperre), kann der Fahrer des Kraftfahrzeuges frühzeitig darauf hingewiesen werden, dass die Betätigung der Parksperre bei rollendem Kraftfahrzeug missbräuchlich ist und zu einem erhöhtem Verschleiß der Parksperre und / oder des Getriebes führt. Somit kann insbesondere der Verschleiß hinausgezögert werden.

Die Betätigung des Bedienelements erfolgt manuell durch den Fahrer des Kraftfahrzeuges.

Das Bedienelement kann nach Bedarf auf beliebige Art und Weise ausgebildet sein, beispielsweise als Wählhebel an einer Mittelkonsole des Kraftfahrzeugs oder als Schalter an einem Armaturenbrett des Kraftfahrzeugs.

Bei einer Ausführungsform ist spezifiziert, dass durch das erste Warnsignal ein erster Hinweis auf einem Kombinationsinstrument des Kraftfahrzeugs für einen vorbestimmten Zeitraum ausgelöst wird.

Der erste Hinweis kann nach Bedarf auf beliebige Art und Weise ausgebildet sein und beispielsweise ein optisches Signal und / oder ein akustisches Signal und / oder die Anzeige eines Textes und / oder Icons umfassen.

Bei einer Ausführungsform ist spezifiziert, dass der erste Hinweis eine Information, die die missbräuchliche Betätigung der Parksperre bei rollendem Kraftfahrzeuges betrifft, und / oder eine Information, die den erhöhten Verschleiß der Parksperre und / oder des Getriebes betrifft, enthält.

Bei einer Ausführungsform ist spezifiziert, dass
- falls die Prüfung der Geschwindigkeit erfolgreich war,
   - eine Zählvariable inkrementiert wird;
   - geprüft wird, ob die Zählvariable größer als ein vorbestimmter zweiter Schwellenwert ist;
   - falls diese Prüfung erfolgreich war, ein zweites Warnsignal erzeugt wird.

Somit stellt die Zählvariable die Anzahl der missbräuchlichen Betätigungen der Parksperre dar. Nach Reparatur der Parksperre oder des Getriebes oder nach Einbau einer neuen Parksperre oder eines neuen Getriebes wird die Zählvariable bevorzugt auf Null zurückgesetzt.

Bei einer Ausführungsform ist spezifiziert, dass durch das zweite Warnsignal ein zweiter Hinweis auf einem Kombinationsinstrument des Kraftfahrzeuges für einen vorbestimmten Zeitraum ausgelöst wird.

Der zweite Hinweis kann nach Bedarf auf beliebige Art und Weise ausgebildet sein und beispielsweise ein optisches Signal und / oder ein akustisches Signal und / oder die Anzeige eines Textes und / oder Icons umfassen.

Bei einer Ausführungsform ist spezifiziert, dass der zweite Hinweis eine Information, die das Erreichen einer Höchstzahl an missbräuchlichen Betätigungen der Parksperre bei rollendem Kraftfahrzeuges betrifft, und / oder eine Information, die den Defekt oder Ausfall der Parksperre betrifft, und / oder eine Information, die das Aufsuchen einer Werkstatt betrifft, und / oder eine Information, die die Verwendung einer Feststellbremse des Kraftfahrzeuges betrifft, enthält.

Es gibt unterschiedliche Möglichkeiten, die Parksperre im Antriebsstrang des Kraftfahrzeuges entsprechend zu realisieren. Wesentlich ist, dass die Parksperre so angeordnet und/oder ausgebildet ist, dass der Antriebsstrang und/oder ein Teil des Antriebsstranges, insbesondere eine Komponente des Antriebsstranges in der Blockierstellung der Parksperre dann so blockiert ist, dass mindestens ein Rad des Kraftfahrzeugs blockiert ist, um ein unbeabsichtigtes Wegrollen zu verhindern. Insbesondere weist das Getriebe eine Antriebswelle, eine Abtriebswelle und/oder eine Zwischenwelle auf, wobei die Antriebswelle mit dem Antriebmotor, und die Abtriebswelle mit mindestens einem Rad wirksam gekoppelt ist. Insbesondere ist die Parksperre dann zum Blockieren der Antriebswelle, der Abtriebswelle und/oder der Zwischenwelle des Getriebes vorgesehen und/oder ausgebildet.

Das Kraftfahrzeug kann vorzugsweise ein automatisches oder automatisiertes Getriebe aufweisen. Vorteilhaft kann das Kraftfahrzeug ein Hybrid- oder Elektrofahrzeug sein, wobei sein Antriebsstrang mindestens eine E-Maschine als Antriebsmotor aufweist.

Es gibt nun eine Vielzahl von Möglichkeiten, das erfindungsgemäße Verfahren zum Steuern eines Kraftfahrzeuges mit Parksperre in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
- FIG. 1: eine bevorzugte Ausführungsform eines Kraftfahrzeuges, insbesondere eines Kraftfahrzeugs mit Parksperre;
- FIG. 2: eine bevorzugte Ausführungsform eines Verfahrens zum Steuern des Kraftfahrzeuges der FIG. 1.

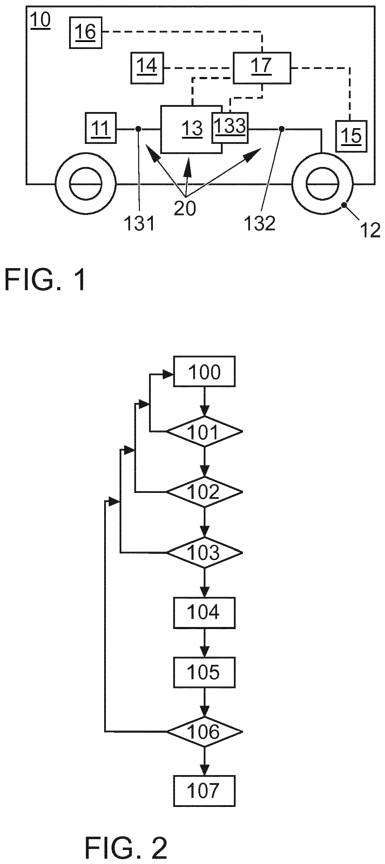

In FIG. 1 ist eine bevorzugte Ausführungsform eines Kraftfahrzeuges 10, insbesondere eines Kraftfahrzeugs "10" mit einer Parksperre 133 schematisch dargestellt.

Das Kraftfahrzeug 10 weist einen Antriebsstrang 20 auf, wobei der Antriebsstrang 20 mindestens ein Antriebmotor 11, mindestens ein Rad 12, insbesondere mehrere Räder, und mindestens ein Getriebe 13 aufweist. Zur Betätigung der Parksperre 133 ist ein Bedienelement 14 vorgesehen und/oder vorhanden, wobei die Parksperre 133 in eine Blockierstellung oder in eine Freigabestellung schaltbar ist. In der Blockierstellung der Parksperre 133 wird der Antriebsstrang 20 und/oder ein Teil des Antriebsstranges 20 bzw. insbesondere eine der der zuvor genannten Komponenten entsprechend blockiert, um ein unbeabsichtigtes Wegrollen des Kraftfahrzeugs 10 zu verhindern. Die Ausbildung und/oder Ausführung einer entsprechenden Parksperre 133, insbesondere die Anordnung der Parksperre 133 innerhalb des Antriebsstranges 20 ist daher auf mehrere Arten und Weisen realisierbar. Im Folgenden darf eine bevorzugte Ausführungsform eines Kraftfahrzeuges 10 und/oder die Anordnung bzw. Ausbildung einer Parksperre 133 beschrieben werden:
Das Kraftfahrzeug 10 weist einen Antriebmotor 11, mindestens ein Rad 12, , insbesondere mehrere Räder, mindestens ein Getriebe 13, ein Bedienelement 14, einen Raddrehzahlsensor 15, ein Kombinationsinstrument 16 und eine Steuereinrichtung 17 auf.

Das Getriebe 13 weist eine Antriebswelle 131, eine Abtriebswelle 132 und/oder eine nicht dargestellte Zwischenwelle und insbesondere die Parksperre 133, insbesondere zum Blockieren der Abtriebswelle 132 auf.

Der Antriebmotor 11 ist an die Antriebswelle 131 gekoppelt und kann diese antreiben, und die Abtriebswelle 132 ist an das mindestens ein Rad 12 gekoppelt und kann dieses antreiben.

Die Parksperre 133 kann eine Blockierstellung, in der diese insbesondere die Abtriebswelle 132 blockiert, und eine Freigabestellung, in der diese insbesondere die Abtriebswelle 132 freigibt, einnehmen. Das Bedienelement 14 ist mit der Steuereinrichtung 17 und/oder mit der Parksperre 133 gekoppelt und beispielhaft insbesondere als ein Wählhebel ausgebildet. Insbesondere ist das Bedienelement 14 manuell vom Fahrer des Kraftfahrzeugs 10 bedienbar und/oder mit der Steuereinrichtung 17 funktional wirksam verbunden.

Insbesondere ist die Parksperre 133 als mechanisch betätigbare Parksperre 133 ausgebildet. Hierbei kann das Bedienelement 14 insbesondere direkt mechanisch, insbesondere über einen Bowdenzug mit der Parksperre 133 wirksam verbunden sein oder auch die Parksperre 133 von der Steuereinrichtung 17 (als mechanisch ausgebildete Parksperre 133) über von der Steuereinrichtung 17 entsprechend angesteuerte, dann die Parksperre 133 mechanisch betätigende Aktuatoren angesteuert werden.

Die Steuereinrichtung 17 ist an die Parksperre 133, das Bedienelement 14, den Raddrehzahlsensor 15 und an das Kombinationsinstrument 16 gekoppelt. Die Steuereinrichtung 17 ist derart ausgebildet, dass diese die Geschwindigkeit des Kraftfahrzeuges 10 insbesondere mithilfe des Raddrehzahlsensors 15 ermitteln kann, sowie auch die Stellung der Parksperre 133 ermitteln kann und die Parksperre 133 in Abhängigkeit von der Betätigung des Bedienelements 14 aus der Freigabestellung in die Blockierstellung (und umgekehrt) schalten kann.

In FIG. 2 ist eine bevorzugte Ausführungsform eines Verfahrens zum Steuern des Kraftfahrzeuges 10 schematisch dargestellt. Dieses Verfahren wird beispielhaft durch die Steuereinrichtung 17 ausgeführt.

In einem Schritt 100 wird die Geschwindigkeit des Kraftfahrzeuges 10 ermittelt. Hierzu wertet die Steuereinrichtung 17 die von dem Raddrehzahlsensor 15 gelieferten Messwerte über die Drehzahl des Rades 12 auf bekannte Art und Weise aus.

In einem Schritt 101 wird geprüft, ob das Bedienelement 14 betätigt wurde. Hierzu wertet die Steuereinrichtung 17 ein von dem Bedienelement 14 geliefertes Zustandssignal aus. Falls diese Prüfung erfolgreich war, wird zu einem Schritt 102 gesprungen, andernfalls wird zu Schritt 100 gesprungen.

In Schritt 102 wird überprüft, ob die Parksperre 133 die Freigabestellung einnimmt. Hierzu wertet die Steuereinrichtung 17 ein von der Parksperre 133 geliefertes Stellungssignal aus. Falls diese Prüfung erfolgreich war, wird zu einem Schritt 103 gesprungen, andernfalls wird zu Schritt 100 gesprungen.

In Schritt 103 wird geprüft, ob die Geschwindigkeit größer als ein vorbestimmter erster Schwellenwert ist. Hierzu liest die Steuereinrichtung 17 den ersten Schwellenwert aus einem Speicher aus und vergleicht ihn mit der ermittelten Geschwindigkeit. Falls diese Prüfung erfolgreich war, wird zu einem Schritt 104 gesprungen, andernfalls wird zu Schritt 100 gesprungen.

In Schritt 104 wird ein erstes Warnsignal erzeugt und an das Kombinationsinstrument 16 gesendet, das für einen vorbestimmten Zeitraum einen ersten Hinweis anzeigt, der eine Information, die die missbräuchliche Betätigung der Parksperre 133 bei rollendem Kraftfahrzeug 10 betrifft, und eine Information, die den erhöhten Verschleiß der Parksperre 133 betrifft, enthält.

In einem Schritt 105 wird die Parksperre 133 in die Blockierstellung geschaltet. Hierzu steuert insbesondere die Steuereinrichtung 17 die Parksperre 133 derart an, dass die Parksperre 133 die Blockierstellung einnimmt.

In einem Schritt 106 wird eine Zählvariable inkrementiert und geprüft, ob die Zählvariable größer als ein vorbestimmter zweiten Schwellenwert ist. Hierzu liest die Steuereinrichtung 17 den zweiten Schwellenwert aus dem Speicher aus und vergleicht ihn mit der Zählvariable. Falls diese Prüfung erfolgreich war, wird zu einem Schritt 107 gesprungen, andernfalls wird zu Schritt 100 gesprungen.

In Schritt 107 wird ein zweites Warnsignal erzeugt und an das Kombinationsinstrument 16 gesendet, das für einen vorbestimmten Zeitraum einen zweiten Hinweis anzeigt, der eine Information, die das Erreichen einer Höchstzahl an missbräuchlichen Betätigungen der Parksperre 133 bei rollendem Kraftfahrzeug 10 betrifft, und/oder eine Information, die den Ausfall der Parksperre 133 betrifft, und/oder eine Information, die das Aufsuchen einer Werkstatt betrifft, und/oder eine Information, die die Verwendung einer nicht dargestellten Feststellbremse des Kraftfahrzeuges 10 betrifft, enthält.

### Bezugszeichenliste

- 10: Kraftfahrzeug
- 11: Antriebmotor
- 12: Rad
- 13: Getriebe
- 131/132/133: Antriebswelle/Abtriebswelle/Parksperre
- 14: Wählhebel, Bedienelement
- 15: Raddrehzahlsensor
- 16: Kombinationsinstrument
- 17: Steuereinrichtung
- 20: Antriebsstrang

## Patentansprüche

1. Verfahren zum Steuern eines Kraftfahrzeuges (10) mit mindestens einer Parksperre (133), wobei das Kraftfahrzeug (10) einen Antriebsstrang (20) aufweist, wobei der Antriebsstrang (20) mindestens einen Antriebmotor (11), mindestens ein Rad (12), insbesondere mehrere Räder, und mindestens ein Getriebe (13) aufweist, wobei ein Bedienelement (14) zur Betätigung der Parksperre (133) vorgesehen und/oder vorhanden ist, wobei die Parksperre (133) eine Blockierstellung, in der die Parksperre (133) den Antriebsstrang (20) und/oder einen Teil des Antriebsstranges (20) blockiert, und eine Freigabestellung, in der die Parksperre (133) den Antriebsstrang (20) und/oder einen Teil des Antriebsstrang (20) freigibt, einnehmen kann, und wobei nach Betätigung des Bedienelements (14) die Parksperre (133) aus der Freigabestellung in die Blockierstellung oder umgekehrt geschaltet wird wobei die Geschwindigkeit des Kraftfahrzeuges (10) ermittelt wird, und wobei nach Betätigung des Bedienelements (14) und falls die Parksperre (133) zuvor die Freigabestellung einnimmt,
- geprüft wird, ob die Geschwindigkeit größer als ein vorbestimmter erster Schwellenwert ist, und wobei
- falls diese Prüfung erfolgreich war, ein erstes Warnsignal erzeugt wird, **dadurch gekennzeichnet, dass**
- das Schalten der Parksperre (133) in die Blockierstellung ausgeführt wird.

2. Verfahren nach Anspruch 1, **dadurch gekennzeichnet, dass** durch das erste Warnsignal ein erster Hinweis auf einem Kombinationsinstrument (16) des Kraftfahrzeugs (10) für einen vorbestimmten Zeitraum ausgelöst wird.

3. Verfahren nach einem der vorstehenden Ansprüche, **dadurch gekennzeichnet, dass** der erste Hinweis eine Information, die die missbräuchliche Betätigung der Parksperre (133) bei rollendem Kraftfahrzeug (10) betrifft, und / oder eine Information, die den erhöhten Verschleiß der Parksperre (133) betrifft, enthält.

4. Verfahren nach einem der vorstehenden Ansprüche, **dadurch gekennzeichnet, dass**
• falls die Prüfung der Geschwindigkeit erfolgreich war,
- eine Zählvariable inkrementiert wird;
- geprüft wird, ob die Zählvariable größer als ein vorbestimmter zweiter Schwellenwert ist;
- falls diese Prüfung erfolgreich war, ein zweites Warnsignal erzeugt wird.

5. Verfahren nach Anspruch 4, **dadurch gekennzeichnet, dass** durch das zweite Warnsignal ein zweiter Hinweis auf einem Kombinationsinstrument (16) des Kraftfahrzeuges (10) für einen vorbestimmten Zeitraum ausgelöst wird.

6. Verfahren nach einem der Ansprüche 4 oder 5, **dadurch gekennzeichnet, dass** der zweite Hinweis eine Information, die das Erreichen einer Höchstzahl an missbräuchlichen Betätigungen der Parksperre (133) bei rollendem Kraftfahrzeug (10) betrifft, und / oder eine Information, die den Defekt oder Ausfall der Parksperre (133) betrifft, und / oder eine Information, die das Aufsuchen einer Werkstatt betrifft, und / oder eine Information, die die Verwendung einer Feststellbremse des Kraftfahrzeuges (10) betrifft, enthält.

7. Verfahren nach einem der vorstehenden Ansprüche, **dadurch gekennzeichnet, dass** das Getriebe (13) eine Antriebswelle (131), eine Abtriebswelle (132) und/oder eine Zwischenwelle aufweist, wobei die Antriebswelle (131) an den Antriebmotor (11) gekoppelt oder koppelbar ist und die Abtriebswelle (132) an das Rad (12) gekoppelt ist, wobei die Parksperre (133) zum Blockieren der Antriebswelle (131), der Abtriebswelle (132) und/oder der Zwischenwelle des Getriebes (13) angeordnet ist.

8. Verfahren nach einem der vorstehenden Ansprüche, **dadurch gekennzeichnet, dass** die Parksperre (133) als eine mechanisch betätigbare Parksperre ausgebildet ist.

9. Verfahren nach Anspruch 8, **dadurch gekennzeichnet, dass** das Bedienelement (14) funktional wirksam mit der Steuereinrichtung (17) gekoppelt ist und die Steuereinrichtung (17) mechanisch betätigbare Komponenten zum Schalten der Parksperre (133) ansteuert.

10. Verfahren nach Anspruch 8, **dadurch gekennzeichnet, dass** das Bedienelement (14) direkt mechanisch mit dem Mechanismus der Parksperre (133) zum Betätigen der Parksperre (133), insbesondere über einen Bowdenzug verbunden ist.

## Claims

1. Method for controlling a motor vehicle (10) having at least one park lock (133), wherein the motor vehicle (10) has a drive train (20), the drive train (20) having at least one drive motor (11), at least one wheel (12), in particular a plurality of wheels, and at least one transmission (13), wherein an operating element (14) for actuating the park lock (133) is provided and/or present, wherein the park lock (133) is able to assume a blocking position, in which the park lock (133) blocks the drive train (20) and/or a part of the drive train (20), and a release position, in which the park lock (133) releases the drive train (20) and/or a part of the drive train (20), and wherein the park lock (133) is switched, after actuation of the operating element (14), from the release position into the blocking position or vice versa, wherein the speed of the motor vehicle (10) is determined, and wherein, after actuation of the operating element (14) and if the park lock (133) assumes the release position beforehand,
- a check is carried out as to whether the speed is greater than a predetermined first threshold value, and
- a first warning signal is generated if such check was successful, **characterized in that**
- the park lock (133) is switched into the blocking position.

2. Method according to claim 1, **characterized in that,** as a result of the first warning signal, a first indication is triggered on a combination instrument (16) of the motor vehicle (10) for a predetermined period of time.

3. Method according to any preceding claim, **characterized in that** the first indication contains information relating to the improper actuation of the park lock (133) while the motor vehicle (10) is moving and/or information relating to the increased wear of the park lock (133).

4. Method according to any preceding claim, **characterized in that**
• if the speed check was successful,
- a count variable is incremented;
- a check is carried out as to whether the count variable is greater than a predetermined second threshold value;
- a second warning signal is generated if such check was successful.

5. Method according to claim 4, **characterized in that,** as a result of the second warning signal, a second indication is triggered on a combination instrument (16) of the motor vehicle (10) for a predetermined period of time.

6. Method according to any of claims 4 or 5, **characterized in that** the second indication contains information relating to reaching a maximum number of improper actuations of the park lock (133) while the motor vehicle (10) is moving and/or contains information relating to the breakdown or failure of the park lock (133) and/or contains information relating to the search for a repair shop and/or contains information relating to the use of a parking brake of the motor vehicle (10).

7. Method according to any preceding claim, **characterized in that** the transmission (13) has a drive shaft (131), an output shaft (132) and/or an intermediate shaft, wherein the drive shaft (131) is coupled or couplable to the drive motor (11) and the output shaft (132) is coupled to the wheel (12), wherein the park lock (133) is arranged to block the drive shaft (131), the output shaft (132) and/or the intermediate shaft of the transmission (13).

8. Method according to any preceding claim, **characterized in that** the park lock (133) is in the form of a mechanically actuatable park lock.

9. Method according to claim 8, **characterized in that** the operating element (14) is functionally operatively coupled to the control device (17), and the control device (17) activates mechanically actuatable components for switching the park lock (133).

10. Method according to claim 8, **characterized in that** the operating element (14) is directly mechanically connected to the mechanism of the parking lock (133) for actuating the parking lock (133), in particular by means of a Bowden cable.

## Revendications

1. Procédé de commande d'un véhicule automobile (10) comprenant au moins un verrouillage de stationnement (133), le véhicule automobile (10) présentant une chaîne cinématique (20), la chaîne cinématique (20) présentant au moins un moteur de propulsion (11), au moins une roue (12), en particulier plusieurs roues, et au moins une boîte de vitesses (13), un élément de commande (14) destiné à actionner le verrouillage de stationnement (133) étant prévu et/ou présent, le verrouillage de stationnement (133) pouvant adopter une position de blocage, dans laquelle le verrouillage de stationnement (133) bloque la chaîne cinématique (20) et/ou une partie de la chaîne cinématique (20), et une position de libération, dans laquelle le verrouillage de stationnement (133) libère la chaîne cinématique (20) et/ou une partie de la chaîne cinématique (20), et, après l'actionnement de l'élément de commande (14), le verrouillage de stationnement (133) étant commuté de la position de libération à la position de blocage ou inversement, la vitesse du véhicule automobile (10) étant déterminée et, après l'actionnement de l'élément d'opération (14) et dans le cas où le verrouillage de stationnement (133) adopte préalablement la position de libération,
- un contrôle étant effectué pour vérifier si la vitesse est supérieure à une première valeur seuil prédéterminée et
- dans le cas où ce contrôle a produit un résultat positif, un premier signal d'alerte étant généré, **caractérisé en ce que**
- la commutation du verrouillage de stationnement (133) dans la position de blocage est exécutée.

2. Procédé selon la revendication 1, **caractérisé en ce que** par le biais du premier signal d'alerte, une première indication est engendrée sur un instrument combiné (16) du véhicule automobile (10) pendant une période prédéterminée.

3. Procédé selon l'une quelconque des revendications précédentes, **caractérisé en ce que** la première indication contient une information qui concerne l'actionnement abusif du verrouillage de stationnement (133) alors que le véhicule automobile (10) roule et / ou une information qui concerne l'usure accrue du verrouillage de stationnement (133).

4. Procédé selon l'une quelconque des revendications précédentes, **caractérisé en ce que**
• dans le cas où le contrôle de la vitesse a produit un résultat positif,
- une variable de comptage est incrémentée ;
- un contrôle est effectué pour vérifier si la variable de comptage est supérieure à une seconde valeur seuil prédéterminée ;
- dans le cas où ce contrôle a produit un résultat positif, un second signal d'alerte est généré.

5. Procédé selon la revendication 4, **caractérisé en ce que,** par le biais du second signal d'alerte, une seconde indication est engendrée sur un instrument combiné (16) du véhicule automobile (10) pendant une période prédéterminée.

6. Procédé selon l'une quelconque des revendications 4 ou 5, **caractérisé en ce que** la seconde indication contient une information qui concerne l'atteinte d'un nombre maximal d'actionnements abusifs du verrouillage de stationnement (133) alors que le véhicule automobile (10) roule et / ou une information qui concerne la déficience ou la défaillance du verrouillage de stationnement (133) et / ou une information qui concerne la consultation d'un atelier et / ou une information qui concerne l'utilisation d'un frein de stationnement du véhicule automobile (10).

7. Procédé selon l'une quelconque des revendications précédentes, **caractérisé en ce que** la boîte de vitesses (13) présente un arbre de transmission (131), un arbre entraîné (132) et/ou un arbre intermédiaire, l'arbre de transmission (131) étant ou pouvant être couplé au moteur de propulsion (11) et l'arbre entraîné (132) étant couplé à la roue (12), le verrouillage de stationnement (133) étant disposé pour bloquer l'arbre de transmission (131), l'arbre entraîné (132) et/ou l'arbre intermédiaire de la boîte de vitesses (13).

8. Procédé selon l'une quelconque des revendications précédentes, **caractérisé en ce que** le verrouillage de stationnement (133) est conçu comme un verrouillage de stationnement à actionnement mécanique.

9. Procédé selon la revendication 8, **caractérisé en ce que** l'élément de commande (14) est couplé de manière fonctionnelle avec le dispositif de commande (17) et le dispositif de commande (17) commande des composants à actionnement mécanique pour commuter le verrouillage de stationnement (133).

10. Procédé selon la revendication 8, **caractérisé en ce que** l'élément de commande (14) est relié de manière mécanique directement avec le mécanisme du verrouillage de stationnement (133) pour actionner le verrouillage de stationnement (133), en particulier par le biais d'un câble Bowden.
